# EUROPÄISCHE PATENTSCHRIFT

(11) **EP 1 460 883 B1**
(45) Veröffentlichungstag und Bekanntmachung des Hinweises auf die Patenterteilung: **19.12.2007**
(21) Anmeldenummer: 04006279.6
(22) Anmeldetag: 17.03.2004
(51) Int. Cl.: H05B 7/085, H05B 7/08

(54) **Verbindungsstücke für Elektroden aus Kohlenstoff-Werkstoffen**
Linking parts for carboneceous based electrodes
Eléments de liaison pour électrodes à éléments actifs carbonées

(30) Priorität: 20.03.2003 DE 10312370
(43) Veröffentlichungstag der Anmeldung: 22.09.2004
(73) Patentinhaber: SGL Carbon AG, 65203 Wiesbaden (DE)
(72) Erfinder: Frohs, Wilhelm, Dr., 86695 Allmannshofen (DE); Brehler, Klaus-Peter, Dr., 4820 Bad Ischl (AT); Heine, Michael, Dr., 86695 Allmannshofen (DE)

(56) Entgegenhaltungen:
- WO-A-01/62667
- US-A- 4 998 709
- US-A1- 2001 033 036

## Beschreibung

Die Erfindung betrifft Verbindungsstücke für Elektroden aus Kohlenstoff-Werkstoffen. Insbesondere betrifft sie Verbindungsstücke, die durch Mischen von Koksen, Pechen und Kohlenstoffasern zu einer Masse und Formen dieser Masse hergestellt werden und zum Verbinden von Elektroden aus Kohlenstoff-Werkstoffen, insbesondere Graphit-Elektroden, verwendet werden.

Elektroden aus Kohlenstoff-Werkstoffen, insbesondere Graphit-Elektroden, werden in der Stahlindustrie in Elektro-Lichtbogenöfen verwendet. Diese Elektroden bestehen aus einzelnen miteinander verbundenen zylindrischen Elementen, wobei entsprechend dem Abbrand jeweils weitere Elemente angefügt werden. Die Elektroden werden üblicherweise mit Verbindungsstücken (Nippel, englisch "connecting pins") miteinander mechanisch und elektrisch leitend verbunden. Dabei haben die Verbindungsstücke die Form eines Doppelkonus (zwei mit der Basis aneinandergefügten Pyramidenstümpfen) mit Gewinden an den Mantelflächen, die in entsprechende zentrisch in den Stirnflächen angeordnete Ausnehmungen der zylindrischen Elektroden passen.

Wegen der thermischen Belastung ist es erforderlich, die thermische Ausdehnung der Verbindungsstücke und der Elektroden so aufeinander anzupassen, daß keine Spannungen entstehen, die zum Bruch oder sonstigen Schädigungen an der Verbindungsstelle führen können. In der Vergangenheit ist vorgeschlagen worden, mit Kohlenstoffasern verstärkte Verbindungsstücke einzusetzen. In dem Dokument US-A 4,998,709 werden Graphit-Verbindungsstücke beschrieben, die durch aus Mesophasen-Pech gewonnene Kohlenstoffasern mit einem Massenanteil von 8 bis 20 % in der zur Herstellung eingesetzten Formmasse verstärkt werden. In der WO 01/62667 ist ein ähnliches Verfahren beschrieben, wobei jedoch die ebenfalls aus Mesophasen-Pech gewonnenen Fasern einen geringeren Elastizitätsmodul aufweisen und in einem geringeren Massenanteil (0,5 bis 5 % in der Formmasse) eingesetzt werden. Dies Verfahren führt zu einer Verringerung des thermischen Ausdehnungskoeffizienten in der Richtung der Extrusion bzw. der Hauptachse des Verbindungsstücks.

Die normalerweise in faserverstärkten Werkstoffen auftretenden Spannungen beruhen auf den unterschiedlichen thermischen Ausdehnungskoeffizienten von Fasern und Matrix. Kohlenstoffasern sind in Faserrichtung praktisch dimensionsstabil (d. h. der thermische Ausdehnungskoeffizient ist geringfügig negativ), während z.B. bei glasartigem Kohlenstoff dieser Koeffizient in der Größenordnung von 3.10⁻⁶ K⁻¹ liegt.

In den Untersuchungen, die der vorliegenden Erfindung zugrunde lagen, wurde nun gefunden, daß sich eine weitere Verbesserung gegenüber den zitierten bekannten Verfahren (US 4998709, WO 01/62667) erreichen läßt, wenn in der Formmasse zur Herstellung der Verbindungsstücke solche Kohlenstoffasern eingesetzt werden, deren Oberfläche vor dem Einmischen in die Formmasse behandelt und mit einer Polymerbeschichtung versehen worden ist. Erfindungsgemäße Verbindungsstücke haben einen erniedrigten longitudinalen (in Richtung der Achse der zylindrischen Elektrode und des Verbindungsstücks) thermischen Ausdehnungskoeffizienten und eine erhöhte Festigkeit. Die erfindungsgemäßen Verbindungsstücke überstehen dank diesen Eigenschaften nicht nur die Carbonisierungstemperaturen unterhalb von 1000 °C, sondern auch eine nachfolgende Graphitierungsbehandlung bei über 3000 °C.

Es ist bekannt, Kohlenstoffasern anodisch in einer Elektrolytlösung zu oxidieren (J. B. Donnet, R. C. Bansal, Carbon Fibers, Marcel Dekker Inc. New York (1990)). Bei dieser Oberflächenbehandlung entstehen sauerstoffhaltige Gruppen auf der Faseroberfläche, in der Regel stark oder schwach saure Carboxylgruppen und Hydroxylgruppen, durch Carbonylgruppen aktivierte (C-Hacide) C-H-Gruppen, sowie basische, pyronartige Oberflächengruppen (H.P.Boehm, E.Diehl, W.Heck, R.Sappok, Angew.Chem.76 (1964),742; B.R. Puri, in Walker: Chemistry and Physics of Carbon, Vol.6, Marcel Dekker, New York, (1971), 191).

Auch durch thermische Oxidation ohne die Erfordernis eines anschließenden Auswaschens zur Entfernung der Elektrolyte lassen sich Sauerstoffgruppen an der Faseroberfläche erzeugen. Als Oxidationsmedium werden Sauerstoff in verschiedenen Konzentrationen, Sauerstoff-Halogen-Mischungen, Ozon, Kohlendioxid oder Stickoxide beschrieben. Eine ausführliche Behandlung dieser Themen findet sich bei J. Cziollek ("Studien zur Beeinflussung des Verstärkungsverhaltens von Kohlenstoffasern durch Oberflächenbehandlung der Fasern und durch Verwendung eines Kohlenstoff/Kohlenstoff-Skelettes -als Verstärkungskomponente", Dissertation Universität Karlsruhe (1983), S. 40 ff).

Bei kohlenstoffaserverstärktem Kohlenstoff ("CFC") wird eine reduzierte Reaktivität der Faseroberfläche als Grundvoraussetzung für eine gute Ausnutzung der Fasereigenschaften angesehen. Die verringerte Reaktivität soll der Matrix die Möglichkeit geben, von der Faseroberfläche wegschrumpfen zu können. Die Schrumpfrisse werden anschließend durch wiederholte Reimprägnier-Recarbonisierschritte (Imprägnieren z. B. mit Pechen und Brennen unter Ausschluß von Oxidationsmitteln) aufgefüllt. Damit werden Kohlenstoffbindebrücken zwischen Faseroberfläche und Matrix erzeugt (J. Cziollek, op. cit.). Darüber hinaus wird diskutiert, daß durch den Reimprägnierungsschritt neu geschaffene Oberflächengruppen die geschwächte Faser/Matrixhaftung wiederherstellen (K. H. Geigl: "Studien zur Oberflächenchemie von Kohlenstoffasern und zur Entwicklung von Kohlenstoff-Hohlfasern", Dissertation Universität Karlsruhe (1979)).

Im Gegensatz zu diesen experimentellen Befunden bei CFC-Verbunden hat sich eine oxidative Oberflächenbehandlung der Fasern in der vorliegenden Erfindung überraschenderweise als günstig für die Eigenschaften eines damit hergestellten Verbundes erwiesen.

Gegenstand der vorliegenden Erfindung sind daher Verbindungsstücke für Elektroden aus Kohlenstoff-Werkstoffen, wobei die Verbindungsstücke Kohlenstoffasern enthalten, deren Oberfläche oxidativ aktiviert ist, und die zusätzlich eine carbonisierte Beschichtung aufweisen. Diese Oberflächenbeschichtung ist das Carbonisierungsprodukt eines Beschichtungsmittels (Schlichte) ausgewählt aus Wachs, Pech, Natur-Harzen, thermoplastischen und duroplastischen Polymeren.

Die Erfindung betrifft weiter ein Verfahren zur Herstellung von Verbindungsstücken, die die erfindungsgemäß behandelten Fasern enthalten.

Bei dem erfindungsgemäßen Verfahren wird im ersten Schritt die Oberfläche der Kohlenstoffasern durch Oxidation aktiviert, die Fasern werden anschließend im zweiten Schritt mit einer Oberflächenbeschichtung mit einem Beschichtungsmittel ausgewählt aus Wachs, Pech, Natur-Harzen oder thermo- oder duroplastischen Polymeren versehen, die beschichteten Fasern werden gegebenenfalls im dritten Schritt bei einer Temperatur von 750 bis 1300 °C zur Carbonisierung der Beschichtung behandelt, im vierten Schritt werden sie mit Koks mit einer mittleren Teilchengröße im Bereich von 0,05 bis 4 mm, Pech mit einer Erweichungstemperatur im Bereich von 70 °C bis 150 °C und gegebenenfalls weiteren Zuschlägen vermischt und zu zylindrischen Körpern geformt, im fünften Schritt werden die zylindrischen Formkörper carbonisiert und anschließend graphitiert, und im sechsten Schritt werden die graphitierten Formkörper zu den Verbindungsstücken mit Gewinden abgedreht.

Dabei ist bevorzugt, daß Kohlenstoffasern in Form von Faserkabeln mit 1000 bis 60 000 Einzelfilamenten eingesetzt werden, die nach dem dritten Verfahrensschritt zu Kurzfasern mit einer mittleren Länge von 0,5 bis 40 mm geschnitten werden.

Weiter ist bevorzugt, daß Kohlenstoffasern in Form von Heavy Tow - Faserkabeln mit 40 000 bis 2 000 000 Einzelfilamenten eingesetzt werden, die nach dem dritten Verfahrensschritt zu Kurzfasern mit einer mittleren Länge von 0,5 bis 40 mm geschnitten werden.

Weiter ist bevorzugt, daß die aktivierten Kohlenstoffasern im zweiten Schritt beschichtet werden in einem wäßrigen oder lösungsmittelhaltigen Bad enthaltend eine Dispersion oder Lösung eines Beschichtungsmittels ausgewählt aus Wachs, Pech, Natur-Harzen oder thermo- oder duroplastischen Polymeren.

Weiter ist bevorzugt, daß die beschichteten Kohlenstoffasern im dritten Schritt bei einer Temperatur von 900 bis 1200 °C zur Carbonisierung der Beschichtung behandelt werden.

Weiter ist bevorzugt, daß im vierten Schritt eine Mischung hergestellt wird, enthaltend je 100 kg Koks, 10 bis 40 kg eines Pechs und 0,2 bis 20 kg Kohlenstoffasern.

Weiter ist bevorzugt, daß als weiterer Zuschlagstoff 0,1 bis 1 kg eines Eisenoxid-Pigments mit einer mittleren Teilchengröße von 0,1 bis 2 µm zugesetzt wird.

Die Oberflächenbeschichtung erfolgt insbesondere mit Polymeren, die eine hinlängliche Kohlenstoffausbeute bei Carbonisierungstemperaturen von bevorzugt ca. 750 bis ca. 1300 °C besitzen. Insbesondere geeignet sind Polyurethanharze, Phenolharze und Peche mit einem C-Rückstand von mindestens 40 % der Masse des eingesetzten Beschichtungsmittels.

Die Carbonisierung des Beschichtungsmittels kann im einem vor der Einmischung in die Formmasse liegenden Temperaturbehandlungsschritt oder bevorzugt simultan mit dem Brennen nach der Grünfertigung erfolgen.

Bevorzugt werden Kohlenstoffasern eingesetzt, die durch Carbonisieren von oxidativ stabilisierten Polyacrylnitrilfasern in bekannter Weise erhältlich sind. Auf eine Temperaturbehandlung der Fasern im Bereich von 1500 °C bis zur Graphitierungstemperatur (1800 °C bis ca. 3000 °C, teilweise auch über 3000 °C) vor der Einmischung kann verzichtet werden. Der Elastizitätsmodul dieser Fasern beträgt bevorzugt 200 bis 250 GPa.

Die oberflächliche Aktivierung der Kohlenstoffasern erfolgt durch Oxidation in einem wäßrigen Bad oder durch einen mit Sauerstoff angereicherten Gasstrom bei einer Temperatur von 400 bis 600 °C, wobei der Gasstrom auch zum Auffächern der Faserkabel dient. In bevorzugter Weise ist es auch möglich, die Kohlenstoffasern elektrochemisch, also anodisch in wäßrigen Bädern zu oxidieren.

Als Oxidationsbad eignen sich wäßrige Lösungen von Salzen oxydierender Säuren, wie Nitrate, Sulfate, Chlorate, Bromate und Jodate, und die genannten Säuren selbst; bevorzugt werden Lösungen, die flüchtige Oxidationsmittel enthalten, wobei bevorzugt die Reduktionsprodukte dieser Oxidationsmittel ebenfalls flüchtig sind. Als flüchtig werden hier solche Stoffe bezeichnet, die beim Trocknen der behandelten Fasern beispielsweise im Luftstrom oder auf Galetten rückstandsfrei oder im wesentlichen rückstandsfrei (mit einem Verdampfungsrückstand, der maximal 0,5 % der Masse der behandelten Fasern ist) entfernt werden. Besonders bevorzugte Oxidationsmittel sind oxidierende Säuren wie Salpetersäure, Chlorsäure oder diese enthaltende Gemische mit neutralen oder salzartigen anorganischen Oxidationsmitteln wie Wasserstoffperoxid, Chromaten, Permanganaten und Hypochloriten (KMnO₄/H₂SO₄, K₂Cr₂O₇/H₂SO₄, HOCl/H₂O₂/NaOCl). Auch Mischungen von nichtoxidierenden Säuren mit salzartigen Oxidationsmitteln sind geeignet, beispielsweise die als Euchlorin bekannten Mischungen von Salzsäure und Chloraten. Bei einer elektrochemischen (anodischen) Oxidation genügt es, durch Lösen von Säuren, Basen oder Salzen in Wasser eine ausreichende Leitfähigkeit herzustellen.

Nach einer elektrochemischen Behandlung (anodische Oxidation) und beim Einsetzen von oxidierenden Lösungen (insbesondere Salzlösungen) ist es erforderlich, die Faserkabel mit entionisiertem Wasser zu waschen, wobei bevorzugt mindestens zwei Bäder hintereinander angeordnet werden. Auch die säurebehandelten Fasern können gewaschen werden, wobei der Trocknungsschritt gegebenenfalls entfallen kann.

Die derart mit sauerstoffhaltigen Gruppen aktivierten Kohlenstoffasern werden danach mit der oben genannten Oberflächenbeschichtung versehen, wobei die getrockneten oder nur gewaschenen Fasern durch ein wäßriges Imprägnierbad geführt werden, die überschüssige beschichtungsmittelhaltige Lösung wird in bekannter Weise abgequetscht und das Faserkabel beispielsweise auf beheizten Galetten getrocknet.

Das Imprägnierbad ist bevorzugt eine wäßrige Zubereitung der genannten Beschichtungsmittel, beispielsweise eine wäßrige Dispersion von Wachsen, insbesondere Polyolefinwachsen auf Basis von Polyäthylen oder Polypropylen, sowie Montanwachsen oder durch Verestern von Fettalkoholen mit langkettigen Fettsäuren mit 12 bis 40 Kohlenstoffatomen synthetisch hergestellten Wachsen. Weiter lassen sich Dispersionen von Polyurethan-Harzen, von (z. B. durch Pfropfen mit Maleinsäureanhydrid) aktivierten Polyolefinen oder deren Copolymeren (z. B. mit Vinylalkohol oder Vinylacetat) oder von Phenolharzen einsetzen. Es ist auch möglich, die aktivierten Kohlenstoffasern mit in organischen Lösungsmitteln gelösten organischen Verbindungen zu behandeln, insbesondere solchen auf Basis von Pechen. Ebenfalls können reine Peche in geeigneter niedrigviskoser Form zur Beschichtung eingesetzt werden.

Die Konzentrationen der Beschichtungsmittel-Zubereitungen liegen üblicherweise so, daß ein von der Beschichtung herrührender Feststoff-Massenanteil auf der Faseroberfläche von 0,5 bis 30 % resultiert. Bevorzugt wird ein Bereich von 3 bis 15 %. Daraus resultiert ein Massenanteil der carbonisierten Beschichtung auf den Fasern von bevorzugt 0,2 bis 15 %.

Bevorzugt werden Kohlenstoffasern auf Basis von (carbonisiertem) Polyacrylnitril eingesetzt, da sich gezeigt-hat, daß diese beim-Mischen zu den erfindungsgemäßen Formmassen durch den Misch- und Formprozeß am wenigsten geschädigt werden. Ihr Elastizitäts-Modul liegt in der Regel nicht so hoch wie der von auf Mesophasen-Pech basierenden Kohlenstoffasern. Dies bedeutet eine geringere Steifigkeit und daher auch eine geringere Scherempfindlichkeit. Sowohl die zusätzlich aufgebrachte Beschichtung als auch die Umwandlung dieser Beschichtung in eine Kohlenstoffschicht führen zu einem zusätzlichen mechanischen Schutz.

Es wurde beobachtet, daß die Zerkleinerung der Fasern bei der Einmischung gegenüber den scherempfmdlichen HM-Fasern (Hochmodul-Fasern) deutlich vermindert wird. Der Ausnutzungsgrad der eingesetzten Fasermenge wird dadurch höher, dies führt zusätzlich zu den niedrigeren Kosten der HT-Fasern ("high tenacity", Hochfest-Fasern) zu einem weiteren Kostenvorteil.

Gleichfalls wird durch die aufgebrachte Schlichte die Dosierbarkeit der zu Kurzfasern (bevorzugt mit einer mittleren Länge von 0,5 bis 40 mm) geschnittenen Faserbündel verbessert. Unbeschichtete Einzelfilamente mit Längen über 2 mm neigen zur Agglomeration und lassen sich daher nicht kontrollierbar dosieren.

Die eingesetzten Faserkabel haben bevorzugt 1000 bis 60 000 Einzelfäden (Filamente), ebenfalls bevorzugt sind Multifilamentkabel auf Heavy Tow-Basis mit mehr als 40 000 Filamenten und bis zu 2 000 000 Filamenten.

Es ist ebenfalls möglich, daß die Kohlenstoffasern in Form von parallel gelegten Fäden (sogenannten "UD-Tapes"), Geweben, Gelegen, Gewirken, Gestricken und/oder Vliesen vorliegen.

Die erfindungsgemäßen Verbindungsstücke weisen bevorzugt einen linearen thermischen Ausdehnungskoeffizienten in der Extrusionsrichtung von - 0,5 bis + 0,1 µm/(K·m) auf. Die Extrusionrichtung ist die Richtung parallel zur Mantelfläche der meist zylindrisch geformten Rohlinge, die nach dem Carbonisieren und Brennen durch Drehen oder Fräsen bearbeitet werden und in die die erforderlichen Gewinde geschnitten werden. Senkrecht zur Extrusionsrichtung beträgt der lineare thermische Ausdehnungskoeffizient bevorzugt von 1,7 bis 2,1 µm/(K·m).

Der Massenanteil an Kohlenstoffasern in den Verbindungsstücken beträgt bevorzugt 0, 2 bis 10 %.

Es wurde in überraschender Weise gefunden, daß sich Verbindungsstücke, die mit derartigen Kohlenstoffasern hergestellt wurden, nicht nur durch die gewünschten niedrigen Werte für die thermischen Ausdehnungskoeffizienten auszeichnen, sondern auch eine erhöhte Festigkeit aufweisen. Beides spricht für eine gute Faser-Matrix-Haftung. Dies kann beispielsweise dadurch gezeigt werden, daß von im Zugversuch oder im Biegeversuch zerstörten Verbindungsstücken eine elektronenmikroskopische Aufnahme der Bruchfläche angefertigt wird und diese mit einer Bruchfläche von Verbindungsstücken verglichen wird, die Fasern ohne eine derartige Behandlung enthalten.

Dieser Befund wird durch die Mikrophotographien verdeutlicht. Dabei zeigt
- Fig. 1: eine elektronenmikroskopische Aufnahme einer Bruchfläche eines Verbindungsstücks (Nippel), in welchem Kohlenstoffasern gemäß der Erfindung eingesetzt wurden, und
- Fig. 2: eine elektronenmikroskopische Aufnahme einer Bruchfläche eines Verbindungsstücks (Nippel), in welchem Kohlenstoffasern aus mesophasischem Pech als Verstärkung eingesetzt wurden.

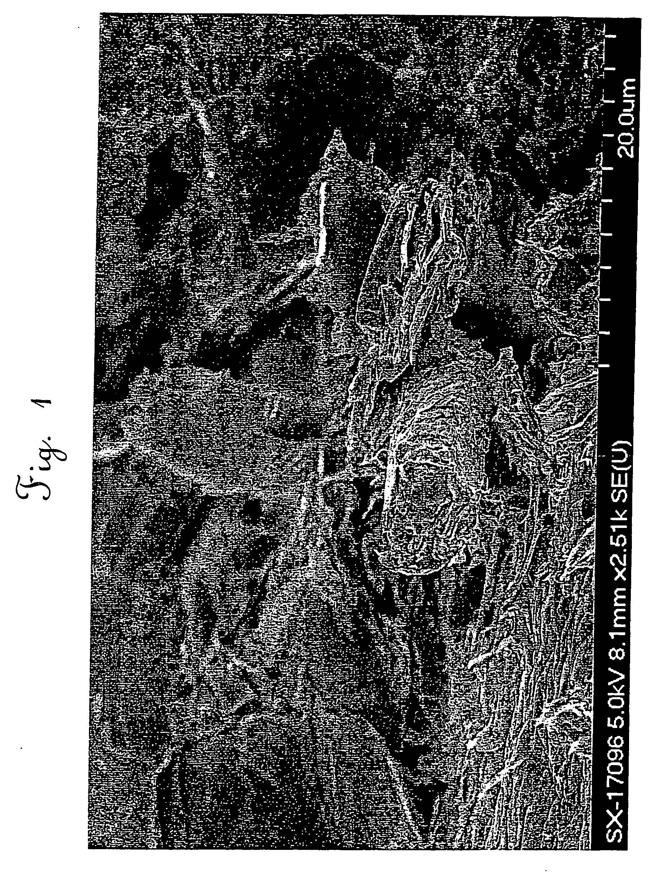

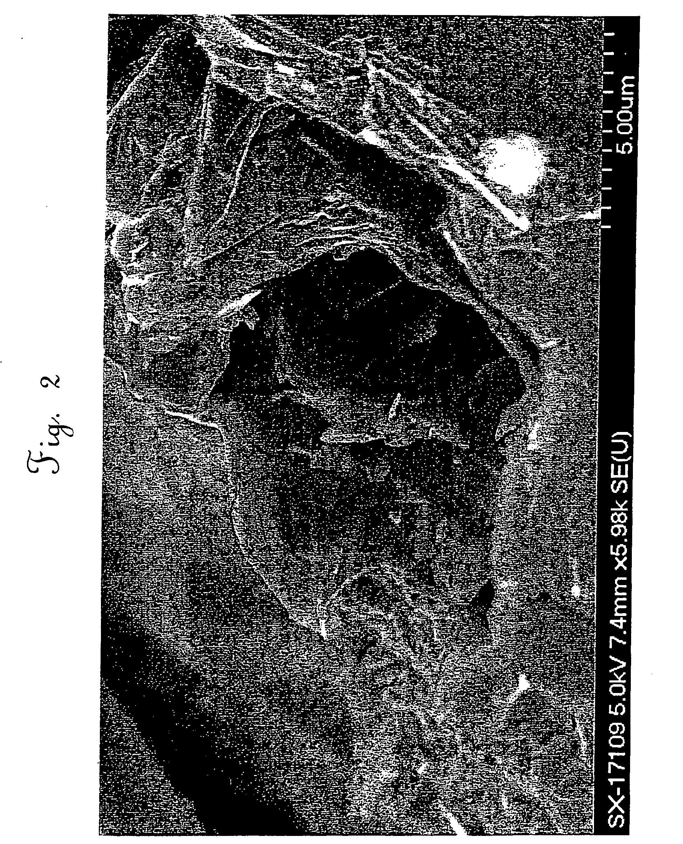

Aus dem Vergleich der beiden Aufnahmen ist deutlich zu erkennen, daß im Fall von Fasern aus mesophasischem Pech ohne die erfindungsgemäße Behandlung (Fig. 2) diese bei einem Bruch einfach aus der Matrix herausgezogen werden und ein Loch hinterlassen, während bei einem Verbindungsstück mit erfindungsgemäß durch Aktivierung und Beschichtung behandelten Fasern diese fest in der Matrix haften und bei einem Bruch nicht aus der Matrix gezogen werden (Fig. 1).

An der Bruchfläche sieht man bei einem Verbindungsstück, das gemäß der Erfindung hergestellt wird, Matrixrisse und Risse der Fasern in der Bruchfläche. Es sind jedoch keine Löcher in der Matrix zu entdecken, aus denen die Verstärkungsfasern beim Versagen herausgezogen wurden. Die Haftung der Fasern an der Matrix ist offenbar so groß, daß die zum Herausziehen der Fasern aus der Matrix ("Pull-out") benötigte Kraft größer ist als die Zugfestigkeit der Fasern. Bei einem Vergleich mit einem Verbindungsstück, daß gemäß dem Stand der Technik mit aus Mesophasen-Pech gewonnenen Kohlenstoffasern ohne die erfindungsgemäße Behandlung gefertigt wurde, sind deutlich die Ausrißlöcher der Fasern aus der Bruchfläche zu erkennen.

Überraschend ist weiter, daß wie vorab erläutert, es trotz der vermutlich besseren Einbindung der Fasern in der Matrix infolge der Oberflächenbehandlung es zu keiner Zerstörung der Fasern infolge von inneren Spannungen kommt.

Die graphitierten Körper, die aus den erfindungsgemäßen Massen hergestellt werden, weisen die folgenden Eigenschaften auf:

| | | |
|---|---|---|
| Dichte | in kg/m³ | 1740 bis 1850 |
| Elastizitätsmodul * im Zugversuch | in GPa | 20 bis 25 |
| Biegefestigkeit * | in MPa | 25 bis 33 |
| spezifischer elektrischer Widerstand * | in µΩ·m | 3,0 bis 4,5 |
| longitudinaler * Wärmeausdehnungskoeffizient | in µm/(K·m) | -0,5 bis 0,1 |
| transversaler Wärmeausdehnungskoeffizient | in µm/(K·m) | 1,7 bis 2,1 |

| | | |
|---|---|---|
| *parallel zur Extrusionsrichtung | | |

Verbindungsstücke aus diesen graphitierten Körpern führen im Praxisversuch zu deutlich verminderter Rißanfälligkeit durch thermische Spannungen.

Die Erfindung wird durch die nachfolgenden Beispiele erläutert.

### Beispiel 1

Ein Faserkabel (7 x 60 000 Filamente mit einem Faserdurchmesser von 7 µm) aus carbonisierten Polyacrylnitrilfasern wurde einer anodischen Oxidation unterworfen. Dazu wurde das Faserkabel entsprechend der in US 4,704,196, Beispiel 3, angegebenen Weise mit einer Geschwindigkeit von 1 m/min durch ein Bad mit einer Wirklänge von ca. 1 m geführt, das eine wäßrige Lösung von Natronlauge (5 g in 100 g der Lösung) enthielt, wobei das Bad permanent umgewälzt wurde. - Dabei wurde eine sinusförmige Spannung von 5 V angelegt, der Strom betrug ca. 70 A.

Anschließend wurde das Faserkabel in einem zweistufigen Waschbad mit entionisiertem Wasser ausgewaschen und abgequetscht. Danach wurde das Kabel durch ein Schlichtebad enthaltend 10 g wäßrig dispergiertes Polyurethan-Harz in 100 g der Dispersion mit einer Wirklänge von 0,5 m geführt, abgequetscht und über Galetten bei 120 °C getrocknet. Das Faserkabel wurde zu Stapelfasern von ca. 6 mm Länge geschnitten.

### Beispiel 2

Es wurde eine Formmasse hergestellt aus
100 kg Nadelkoks mit einer mittleren Teilchengröße von 0,5 mm, 26 kg Steinkohlenteerpech mit einer Erweichungstemperatur (SPM) von 110 °C, und 3 kg carbonisierten Kohlenstoffasern auf PAN-Basis mit einem Durchmesser von 7 µm und einer mittleren Länge von 6 mm, die gemäß Beispiel 1 anodisch oxidiert und mit einer Polyurethan-Beschichtung versehen wurden, sowie 0,5 kg Eisenoxid in Pigmentqualität (Teilchengrößenbereich 0,1 bis 2 µm).

Die Masse wurde 0,5 Stunden in einem Knet-Mischer bei 160 °C gemischt, bei 120 °C zu einem zylindrischen Strang extrudiert und nach Schneiden auf eine Länge von ca. 3000 mm bei 800 °C während 500 Stunden gebrannt. Die gebrannten zylindrischen Kohlenstoffkörper wurden anschließend dreimal mit einem Imprägnierpech (SPM 80 °C) imprägniert und bei 800 °C nachgebrannt. Die imprägnierten und nachgebrannten Kohlenstoffkörper wurden in herkömmlicher Weise bei ca. 3000 °C graphitiert.

An den zylindrischen Graphitkörpern mit 305 mm Durchmesser und 2300 mm Länge wurden die folgenden Werte gemessen (als Vergleich wurde eine entsprechende Mischung ohne Faserzusatz hergestellt, die Meßwerte an den daraus hergestellten Graphitkörpem sind in Klammern angegeben):

| | | |
|---|---|---|
| longitudinaler Wärmeausdehnungskoeffizient | in µm/(K·m) | 0,06 (0,14) |
| transversaler Wärmeausdehnungskoeffizient | in µm/(K·m) | 1,88 (1,88) |
| Biegefestigkeit parallel zur Extrusionsrichtung | in MPa | 28,5 (26,0) |

## Patentansprüche

1. Verbindungsstücke für Elektroden aus Kohlenstoff-Werkstoffen, **dadurch gekennzeichnet, daß** die Verbindungsstücke Kohlenstoffasern enthalten, deren Oberfläche oxidativ aktiviert ist, und die zusätzlich eine carbonisierte Beschichtung aufweisen, wobei die carbonisierte Beschichtung das Carbonisierungsprodukt eines Beschichtungsmittels ist ausgewählt aus Wachs, Pech, Natur-Harzen, thermoplastischen und duroplastischen Polymeren.

2. Verbindungsstücke nach Anspruch 1, **dadurch gekennzeichnet, daß** die Kohlenstoffasern einen Elastizitätsmodul von 200 bis 250 GPa aufweisen.

3. Verbindungsstücke nach Anspruch 1, **dadurch gekennzeichnet, daß** sie einen linearen thermischen Ausdehnungskoeffizienten von -0,5 bis + 0,1 µm/(K·m) in der Richtung parallel zur Mantelfläche und 1,7 bis 2,1 µm/(K·m) in der dazu senkrechten Ebene aufweisen.

4. Verbindungsstücke nach Anspruch 1, **dadurch gekennzeichnet, daß** die Kohlenstoffasern eine mittlere Länge von 0,5 bis 40 mm aufweisen.

5. Verbindungsstücke nach Anspruch 1, **dadurch gekennzeichnet, daß** der Massenanteil von Kohlenstoffasern in den Verbindungsstücken von 0,2 bis 10 % beträgt.

6. Verbindungsstücke nach Anspruch 1, **dadurch gekennzeichnet, daß** der Massenanteil der carbonisierten Beschichtung auf den Kohlenstoffasern, bezogen auf die Masse der Kohlenstoffasern, 0,2 bis 15 % beträgt.

7. Verbindungsstücke nach Anspruch 1, **dadurch gekennzeichnet, daß** die Kohlenstoffasern solche auf der Basis von Polyacrylnitril sind.

8. Verbindungsstücke nach Anspruch 1, **dadurch gekennzeichnet, daß** die Kohlenstoffasern in Form von parallel gelegten Fäden, Geweben, Gelegen, Gewirken, Gestricken und/oder Vliesen vorliegen.

9. Verfahren zur Herstellung von Kohlenstoffasern enthaltenden Verbindungsstücken für Elektroden aus Kohlenstoff-Werkstoffen, **dadurch gekennzeichnet, daß** im ersten Schritt die Oberfläche der Kohlenstoffasern durch Oxidation aktiviert wird, daß die Fasern anschließend im zweiten Schritt mit einer Oberflächenbeschichtung mit einem Beschichtungsmittel ausgewählt aus Wachs, Pech, Natur-Harzen oder thermo- oder duroplastischen Polymeren versehen werden, die beschichteten Fasern gegebenenfalls im dritten Schritt bei einer Temperatur von 750 bis 1300 °C zur Carbonisierung der Beschichtung behandelt werden, im vierten Schritt mit Koks mit einer mittleren Teilchengröße im Bereich von 0,05 bis 4 mm, Pech mit einer Erweichungstemperatur im Bereich von 70 °C bis 150 °C und gegebenenfalls weiteren Zuschlägen vermischt und zu zylindrischen Körpern geformt werden, im fünften Schritt die zylindrischen Formkörper carbonisiert und anschließend graphitiert werden, und im sechsten Schritt die graphitierten Formkörper zu den Verbindungsstücken mit Gewinden abgedreht werden.

10. Verfahren nach Anspruch 9, **dadurch gekennzeichnet, daß** Kohlenstoffasern in Form von Faserkabeln mit 1000 bis 60 000 Einzelfilamenten eingesetzt werden, die nach dem dritten Verfahrensschritt zu Kurzfasern mit einer mittleren Länge von 0,5 bis 40 mm geschnitten werden.

11. Verfahren nach Anspruch 9, **dadurch gekennzeichnet, daß** Kohlenstoffasern in Form von heavy tow - Faserkabeln mit 40 000 bis 2 000 000 Einzelfilamenten eingesetzt werden, die nach dem dritten Verfahrensschritt zu Kurzfasern mit einer mittleren Länge von 0,5 bis 40 mm geschnitten werden.

12. Verfahren nach Anspruch 9, **dadurch gekennzeichnet, daß** die Kohlenstoffasern in einem ein Oxidationsmittel enthaltenden wäßrigen Bad aktiviert werden.

13. Verfahren nach Anspruch 9, **dadurch gekennzeichnet, daß** die Kohlenstoffasern in einem wäßrigen Bad durch anodische Oxidation aktiviert werden.

14. Verfahren nach Anspruch 9, **dadurch gekennzeichnet, daß** die Kohlenstoffasern in einem ein Oxidationsmittel enthaltenden Gasstrom aktiviert werden.

15. Verfahren nach Anspruch 9, **dadurch gekennzeichnet, daß** die aktivierten Kohlenstoffasern im zweiten Schritt beschichtet werden in einem wäßrigen oder lösungsmittelhaltigen Bad enthaltend eine Dispersion oder Lösung eines Beschichtungsmittels ausgewählt aus Wachs, Pech, Natur-Harzen oder thermo- oder duroplastischen Polymeren.

16. Verfahren nach Anspruch 9, **dadurch gekennzeichnet, daß** die beschichteten Kohlenstoffasern im dritten Schritt bei einer Temperatur von 900 bis 1200 °C zur Carbonisierung der Beschichtung behandelt werden.

17. Verfahren nach Anspruch 9, **dadurch gekennzeichnet, daß** im vierten Schritt eine Mischung hergestellt wird, enthaltend je 100 kg Koks, 10 bis 40 kg eines Pechs und 0,2 bis 20 kg Kohlenstoffasern.

18. Verfahren nach Anspruch 17, **dadurch gekennzeichnet, daß** als weiterer Zuschlagstoff 0, 1 bis 1 kg eines Eisenoxid-Pigments mit einer mittleren Teilchengröße von 0,1 bis 2 µm zugesetzt wird.

## Claims

1. Connecting pieces for carbon-material electrodes, **characterized in that** the connecting pieces contain carbon fibres whose surface has been oxidatively activated and which additionally have a carbonized coating, the carbonized coating being the carbonization product of a coating material selected from wax, pitch, natural resins, thermoplastic and thermosetting polymers.

2. Connecting pieces according to Claim 1, **characterized in that** the carbon fibres have a modulus of elasticity of from 200 to 250 GPa.

3. Connecting pieces according to Claim 1, **characterized in that** they have a linear coefficient of thermal expansion of from -0.5 to +0.1 µm/(K-m) in the direction parallel to the lateral surface and from 1.7 to 2.1 µm/(K·m) in the plane perpendicular thereto.

4. Connecting pieces according to Claim 1, **characterized in that** the carbon fibres have an average length of from 0.5 to 40 mm.

5. Connecting pieces according to Claim 1, **characterized in that** the mass fraction of carbon fibres in the connecting pieces is from 0.2 to 10%.

6. Connecting pieces according to Claim 1, **characterized in that** the mass fraction of the carbonized coating on the carbon fibres, based on the mass of the carbon fibres, is from 0.2 to 15%.

7. Connecting pieces according to Claim 1, **characterized in that** the carbon fibres are those based on polyacrylonitrile.

8. Connecting pieces according to Claim 1, **characterized in that** the carbon fibres are present in the form of parallel filaments, woven fabrics, layered fabrics, warp-knitted fabrics, knitted fabrics and/or nonwoven fabrics.

9. A process for the production of connecting pieces containing carbon fibres and intended for carbon-material electrodes, **characterized in that** the surface of the carbon fibres is activated by oxidation in a first step, that the fibres are then provided, in a second step, with a surface coating comprising a coating material selected from wax, pitch, natural resins or thermoplastic or thermosetting polymers, the coated fibres are optionally treated in a third step at a temperature of from 750 to 1 300°C for carbonization of the coating, are mixed in a fourth step with coke having a mean particle size in the range from 0.05 to 4 mm, pitch having a softening temperature in the range from 70°C to 150°C and optionally further additives and shaped to give cylindrical bodies, the cylindrical mouldings are carbonized and then graphitized in a fifth step, and the graphitized mouldings are turned, in a sixth step, to give the connecting pieces having threads.

10. A process according to Claim 9, **characterized in that** carbon fibres in the form of fibre tow comprising from 1 000 to 60 000 individual filaments are used, which, after the third process step, are cut to give short fibres having an average length of from 0.5 to 40 mm.

11. A process according to Claim 9, **characterized in that** carbon fibres in the form of heavy tow comprising from 40 000 to 2 000 000 individual filaments are used, which, after the third process step, are cut to give short fibres having an average length of from 0.5 to 40 mm.

12. A process according to Claim 9, **characterized in that** the carbon fibres are activated in an aqueous bath containing an oxidizing agent.

13. A process according to Claim 9, **characterized in that** the carbon fibres are activated in an aqueous bath by anodic oxidation.

14. A process according to Claim 9, **characterized in that** the carbon fibres are activated in a gas stream containing an oxidizing agent.

15. A process according to Claim 9, **characterized in that** the activated carbon fibres are coated, in the second step, in an aqueous or solvent-containing bath containing a dispersion or solution of a coating material selected from wax, pitch, natural resins or thermoplastic or thermosetting polymers.

16. A process according to Claim 9, **characterized in that** the coated carbon fibres are treated, in the third step, at a temperature of from 900 to 1 200°C for carbonization of the coating.

17. A process according to Claim 9, **characterized in that**, in the fourth step, a mixture containing for each 100 kg of coke, from 10 to 40 kg of a pitch and from 0.2 to 20 kg of carbon fibres is prepared.

18. A process according to Claim 17, **characterized in that** from 0.1 to 1 kg of an iron oxide pigment having a mean particle size of from 0.1 to 2 µm is added as a further additive.

## Revendications

1. Raccords pour électrodes en matériaux à base de carbone,
**caractérisés en ce qu'**
ils contiennent des fibres de carbone, dont la surface est oxydativement activée et comportent, en plus, un revêtement carbonisé, sachant que ce revêtement carbonisé est le produit de carbonisation d'un produit de revêtement choisi parmi la cire, le brai, les résines naturelles, les polymères thermoplastiques et duroplastiques.

2. Raccords selon la revendication 1,
**caractérisés en ce que**
les fibres de carbone présentent un module d'élasticité de 200 à 250 GPa.

3. Raccords selon la revendication 1,
**caractérisés en ce qu'**
ils présentent un coefficient de dilatation thermique linéaire de - 0,5 à +0,1 µm/(K.m) dans une direction parallèle à la surface d'enveloppe et 1,7 à 2,1 µm/K.m) dans le plan perpendiculaire à celle-ci

4. Raccords selon la revendication 1,
**caractérisés en ce que**
les fibres de carbone présentent une longueur moyenne de 0,5 à 40 mm.

5. Raccords selon la revendication 1,
**caractérisés en ce que**
la proportion massique des fibres de carbone, dans les raccords, est de 0,2 à 10 %.

6. Raccords selon la revendication 1,
**caractérisés en ce que**
la proportion massique du revêtement carbonisé sur les fibres de carbone, rapportée à la masse de ces fibres de carbone, est de 0,2 à 15 %.

7. Raccords selon la revendication 1,
**caractérisés en ce que**
les fibres de carbone sont des fibres à base de polyacrylonitrile.

8. Raccords selon la revendication 1,
**caractérisés en ce que**
les fibres de carbone se présentent sous la forme de fils, tissus, tissus à mailles, tricotages et/ou non tissés disposés parallèlement.

9. Procédé de fabrication de raccords contenant des fibres de carbone pour électrodes en matériaux à base de carbone,
**caractérisé en ce que**
dans une première étape, on active par oxydation la surface des fibres de carbone, dans une deuxième étape on applique ensuite sur les fibres un revêtement de surface avec un produit choisi parmi la cire, le brai, les résines naturelles ou les polymères thermo- ou duroplastiques, le cas échéant, on traite dans une troisième étape les fibres revêtues à une température de 750 à 1 300 °C pour la carbonisation du revêtement, dans une quatrième étape, on les mélange avec du coke d'une granulométrie moyenne située dans la plage de 0,05 à 4 mm, du brai d'une température de ramollissement située entre 70 et 150 °C et, le cas échéant, d'autres additifs et on les forme en corps cylindriques, dans une cinquième étape on carbonise les corps cylindriques, après quoi on les graphite, et dans une sixième étape on tourne les corps graphités en les raccords munis de filetages.

10. Procédé selon la revendication 9,
**caractérisé en ce qu'**
on utilise des fibres de carbone en forme de câbles de fibres comportant 1 000 à 60 000 filaments individuels, qui sont coupés, après la troisième étape du procédé, en fibres courtes d'une longueur moyenne de 0,5 à 40 mm.

11. Procédé selon la revendication 9,
**caractérisé en ce qu'**
on utilise des fibres de carbone sous forme de câbles de fibres « heavy tow » de 40 000 à 2 000 000 de filaments individuels, qui sont coupés, après la troisième étape du procédé, en fibres courtes d'une longueur moyenne de 0,5 à 40 mm.

12. Procédé selon la revendication 9,
**caractérisé en ce que**
les fibres de carbone sont activées dans un bain aqueux contenant un agent d'oxydation.

13. Procédé selon la revendication 9,
**caractérisé en ce que**
les fibres de carbone sont activées dans un bain aqueux par oxydation anodique.

14. Procédé selon la revendication 9,
**caractérisé en ce que**
les fibres de carbone sont activées dans un courant de gaz contenant un agent d'oxydation.

15. Procédé selon la revendication 9,
**caractérisé en ce que**
les fibres de carbone activées sont revêtues, dans la deuxième étape, dans un bain aqueux ou contenant un solvant, contenant une dispersion ou une solution d'un agent de revêtement choisi parmi la cire, le brai, les résines naturelles ou les polymères thermo- ou duroplastiques.

16. Procédé selon la revendication 9,
**caractérisé en ce que**
les fibres de carbone revêtues sont traitées dans la troisième étape à une température de 900 à 1 200 °C pour la carbonisation du revêtement.

17. Procédé selon la revendication 9,
**caractérisé en ce que**
dans la quatrième étape, se trouve produit un mélange contenant 100 kg de coke, 10 à 40 kg d'un brai et 0,2 à 20 kg de fibres de carbone.

18. Procédé selon la revendication 17,
**caractérisé en ce que**
comme autre additif, on ajoute 0,1 à 1 kg d'un pigment d'oxyde de fer d'une granulométrie moyenne de 0,1 à 2 µm.
